# EUROPEAN PATENT APPLICATION

(11) **EP 3 270 126 A1**
(43) Date of publication of application: **17.01.2018**
(21) Application number: 16179715.4
(22) Date of filing: 15.07.2016
(51) Int. Cl.: G01J 3/02, G01J 3/28, G01J 3/453

(54) **LIPPMANN-BASED WAVEGUIDE SPECTROMETER WITH PLANAR WAVEGUIDE CHIP**

(71) Applicant: Micos Engineering GmbH, 8600 Dübendorf (CH)
(72) Inventor: Madi, Mohammadreza, 8903 Birmenstorf (CH); Giaccari, Philippe, 8600 Dübendorf (CH)
(74) Representative: Schneider Feldmann AG Patent- und Markenanwälte

(57) **Abstract**

A waveguide spectrometer, comprising at least one planar waveguide chip (10) with at least one waveguide extending from an inlet face (F) to a reflective surface (105), in which an incident beam (11) is injectable, to achieve counter propagating optical signals inside the planar waveguide chip (10),wherein a multiplicity of sampling elements (1040) configured to out-couple light from the interfering guided optical signals and photo detectors is arranged in or on the planar waveguide chip (10), while sampling elements (1040) and photo detectors are electrically connected to an electronic read out system is created, showing enhanced throughput and spectral bandwidth. This is reached by beam expanding means located ahead the inlet face (F) of the planar waveguide chip (10), resulting in an expanded beam (110') and the single sampling elements (1040) are embedded in the planar waveguide chip (10) or located on a surface plane (1020) of the planar waveguide chip (10) forming a two dimensional grid (104), comprising a multiplicity of lines with sampling elements (1040) spaced apart from each other by an inline pitch (P) in each line, wherein directly neighbouring lines of sampling elements (1040) perpendicular to the propagation direction (z) have a well-defined offset along the propagation direction (z) to each other, defining a sampling interval (d) in propagation direction (z) of the waveguide chip (10).

## Description

### TECHNICAL FIELD

The present invention describes a waveguide spectrometer, comprising at least one planar waveguide chip with at least one waveguide extending from an inlet face to a reflective surface, in which an incident beam is injectable, to achieve counter propagating optical signals inside the planar waveguide chip obtaining interference between the counter propagating optical signals generating an interference pattern along the propagation direction of the planar waveguide chip, wherein a multiplicity of sampling elements configured to out-couple light from the interfering guided optical signals and photo detectors is arranged in or on the planar waveguide chip, while the photo detectors are applicable as evanescent field samplers able to couple out signals from the sampling elements each electrically connected to an electronic read out system.

### STATE OF THE ART

The dominating technology for imaging spectrometers covering spectral range from UV to SWIR for the time being are the dispersive instruments in push-broom mode. Imaging FTS (Fourier Transform Spectrometer) systems are commercially operative mostly in the IR region and the first space instrumentation (MTG-IRS instrument) is expected to become operational by 2020. However, it is important to mention that all these instruments, despite their excellent capabilities, are rather large and massive. Imaging spectrometers intended for very wide spectral ranges are best in terms of accuracy, if they are designed based on all-mirror systems. This in turn leads to large, very massive, complex, and costly systems.

Ideally, miniaturization of a spectrometer should not limit its light gathering capability or otherwise compromise its performance. In many spectroscopy applications, specifically in the space domain, a large optical throughput and a high spectral resolution is needed. Therefore, one scope of research is to increase the throughput.

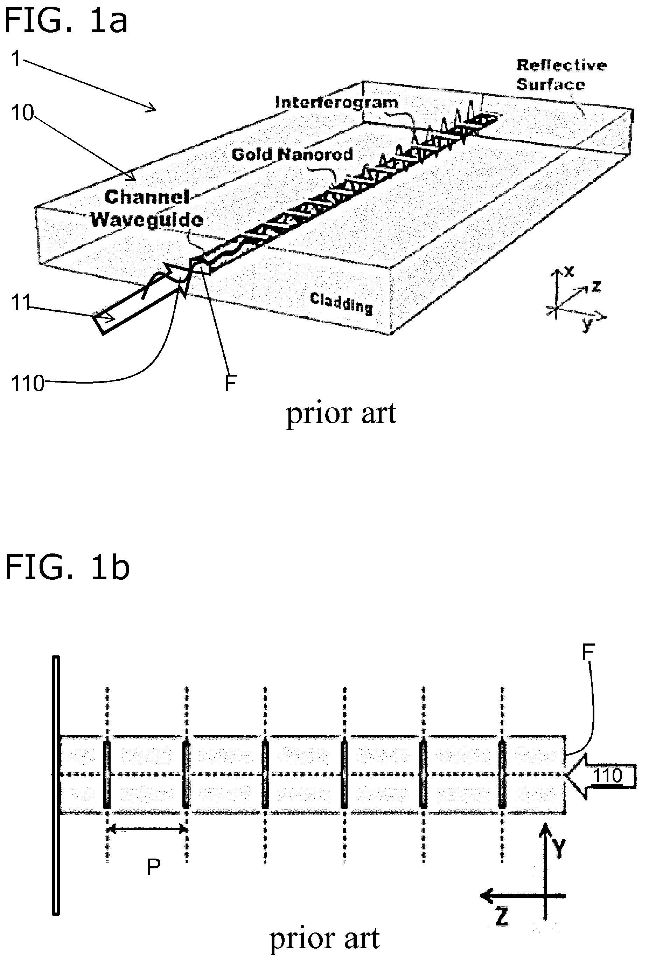

The closest prior art are single-mode waveguide spectrometers as shown in Figure 1a, showing a conventional waveguide spectrometer as the basis of SWIFTS configuration based on single-mode waveguide, here a channel waveguide is shown. In the waveguide spectrometer nano-samplers, here golden rods are geometrically fixed and the interferogram is sampled discretely along the z-axis. The waveguide chip is manufactured from one material or is an assembly of different materials, wherein at least one channel waveguide is integrated, while the refractive index of the cladding material and the channel waveguide are differing. The channel waveguide is extending from an inlet face F of the waveguide chip 10 proceeding through the planar waveguide chip 10 to a reflective surface, to achieve counter propagating optical signals inside the waveguide chip 10. An injected beam 11 in form of confined light beam 110 is injected into the channel waveguide. The channel waveguides are configured to obtain interference between the counter propagating optical signals generating an interference pattern along the waveguide chip 10 respectively each channel waveguide. A multiplicity of sampling elements, here gold nanorods, is positioned on the top surface of the cladding in injection direction z, configured to out-couple light from the interfering guided optical signals. A multiplicity of photo detectors (not shown) is arranged on the top face of the waveguide chip 10, while the photo detectors are applicable as evanescent field samplers each electrically connected to an electronic read out system. In Figure 1b the pitch P of nano-sampler in injection direction z is indicated, which are out-coupling the optical signals for measurements of interferogram along the channel waveguide. This interferogram can be measured along the channel waveguide, due to the fact, that the nano-sampler and photo detectors are distributed along the channel waveguides on the top face of the waveguide chip 10. So far it was desired to reduce the pitch P along each channel waveguide nearly to zero to increase the number of interferogram sampling points.

These state-of-the-art Lippmann-based waveguide spectrometers are suffering from the number of nano-samplers/detectors on the waveguide chip 10 and they achieve only a limited number of measurement points over the interferogram, which causes a narrow spectral bandwidth. In another words, with the current technology, the nano-samplers cannot be placed at sub-micron distances.

Another challenge is the optical throughput of single-mode waveguides, which is intrinsically limited because of using single-mode waveguides. The throughput is an important factor in imaging spectrometers especially for remote sensing applications, where the collected irradiance at the focal plane of the telescope is extremely faint. For instance, in remote sensing satellites from low earth orbit, the integration time is very low and the number of photons per second entering the aperture is limited. Higher apertures are required to increase the signal to noise ratio; this, in its turn, is mass/volume driving. Since the radiation source is faint, the effort is to couple as much photon as possible into the system, because a higher throughput is desired.

### DESCRIPTION OF THE INVENTION

The object of the present invention is to create a high spectral resolution Lippmann-based waveguide spectrometer with enhanced throughput and spectral bandwidth, being lightweight and compact in comparison with the prior art waveguide spectrometer.

The optical throughput and spatial sampling spacing are currently the main constraints on performance of Lippmann-based waveguide spectrometers for real-life applications. With this invention the performance is highly improved, while not simply the pitch, distance between sampling elements was decreased to smaller values.

### BRIEF DESCRIPTION OF THE DRAWINGS

A preferred exemplary embodiment of the subject matter of the invention is described below in conjunction with the attached drawings.
- Figure 1a: shows a schematic perspective view of a single-mode waveguide spectrometer known from prior art, while
- Figure 1b: shows a schematic of the top surface of prior art single-mode waveguide showing the configuration of nano-samplers in one row, here golden rods, with the fixed pitch and therefore sampling interval.
- Figure 2a: shows a schematic sectional view of planar sandwich-like waveguide chip with different layers, while
- Figure 2b: shows a perspective view of planar waveguide spectrometer in action, after an injected beam expanded along an expansion direction along the horizontal y-axis and
- Figure 2c: shows a top view on the upper cladding of a planar sandwich-like waveguide chip with sampling element pattern of nano-samplers, here golden nanodisks, in form of a 2d grid.
- Figure 3a: shows a single Lippmann-based planar waveguide spectrometer (LiPWS) on a substrate, with a pattern of nano-samplers distributed on the top face of the upper cladding, while
- Figure 3b: shows a planar waveguide chip according to Figure 3a with a multiplicity of grid arrays or patterns of nano-samplers.
- Figures 4: are showing schematically possible sampling grids to be fabricated on the surface of the planar waveguide chip in a straight configuration, while
- Figure 5: shows a sampling pattern in form of a rotated regular gird of nano-sampler.
- Figure 6: shows a schematic sectional view of planar sandwich-like waveguide chip with different layers and embedded sampling elements.

### DESCRIPTION

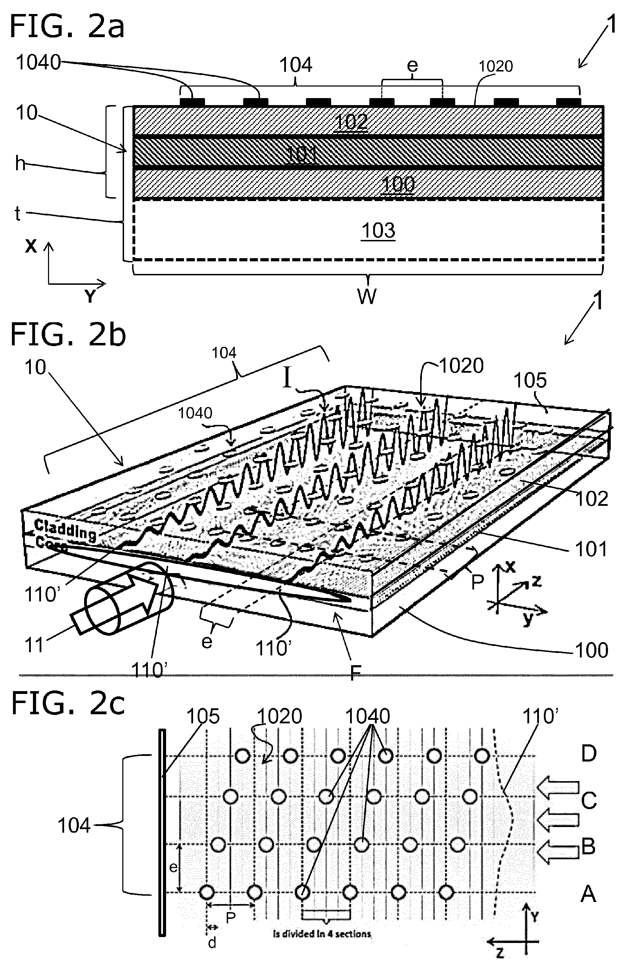

In the following a Lippmann-based planar waveguide spectrometer 1, (LiPWS) will be presented, comprising a planar waveguide chip 10, with a slab-like sandwich structure. The waveguide chip 10 comprises at least a lower cladding 100, a core layer 101 and an upper cladding 102. These layers 100, 101, 102 are all showing the same width W along a length L of the waveguide chip 10 with a height h. Lower cladding 100, core layer 101 and upper cladding 102 can optionally be supported by a substrate 103 or substrate layer 103 indicated with dotted lines in Figure 2a below the lower cladding 100 in vertical direction x. Than a total height t of the planar waveguide chip 10 with substrate 103 can be defined by t.

On the top face of the upper cladding 102 sampling elements 1040 are positioned facing away from the upper cladding 102, therewith distanced to the core layer 101, separated by the upper cladding 102. The function of the sampling elements 1040 is out-coupling of evanescent fields and facilitating measurements with not shown evanescent field samplers or photo detectors. The sampling elements 1040 are here nano-sampler 1040, usually in form disks with diameters in the range of a few hundred nanometers, which are arranged in two dimensional grids spanned in injection direction z and expanding direction y. The sampling elements 1040 can also be embedded in the planar waveguide chip 10, instead of arranged outside on the surface plane 1020.

Here rectangular geometrical grid arrays are shown, with distances e in expanding direction y, but also arbitrary 2D pattern of sampling elements 1040 with well-defined sampling element 1040 positions in either direction achieving well-defined sampling intervals along the light propagation can be chosen.

The waveguide is built by the lower cladding 100, core layer 101 and upper cladding 102 due to the layer like or slab-like sandwich form and differences in refractive index, while the refractive index of the core layer 101 is larger than the refractive indices of the lower and upper cladding 100, 102.

An injected beam 11 in form of an expanded beam 110', expanded by not shown expanding means, is guided through the planar waveguide chip 10. The expansion of the expanded beam 110' is indicated by the elongated light spot on the inlet face F. The beam expanding means are located in front of the at least one inlet face F, ahead the planar waveguide chip 10, generating the expanded beam 110'. The expanding means can be permanently fixed to the waveguide chip 10 or can be fabricated detachable from the waveguide chip 1.

As can be seen in Figure 2b a reflective surface 105 is positioned at the abutting face being opposite to the inlet face F of the planar waveguide chip 10. By the expanding means the expanded beam 110' can provide a multiplicity of interferograms I building up along the core layer 101 between inlet face F and reflective surface 105.

Here a multiplicity of sampling elements 1040 with a pitch P in injection direction z or propagation direction z and distances e in expanding direction y is distributed on the top surface of the upper cladding 102 as the sampling element pattern 104 in form of a 2d grid. The sampling elements 1040 are out-coupling light signals, which can be detected by evanescent field samplers in form of not shown photo detectors. The detected signals of the photo detectors are measured by an electronic read out system, which is also not shown.

In the prior art waveguide chips, distances between directly neighbouring sampling elements are defined by an inline pitch P in propagation direction z, which equals sampling interval d in propagation direction z of the injected beam 11.

By using a 2d pattern, the value of the sampling interval d in propagation direction z of the injected expanded beam 110', as the minimum distance between directly neighbouring sampling elements 1040 in propagation direction z, is decreased.

For expanding the injected beam 11, resulting in an injected expanded beam 110', beam expanding means, for example a front end optics, are known to persons skilled in the art. As a result a multiplicity of interferograms I distributed in the waveguide chip 10 can be measured between inlet face F an reflective surface 105.

Here a planar waveguide chip 10 is used and the injected beam 11 is expanded in the unguided direction of the waveguide chip 10. Because of the beam expansion in the planar waveguide chip 10, the interferogram I is expanded in the horizontal plane (y-z) and this allows intermediate-point sampling through custom sampling element pattern 104.

Here the single sampling elements 1040 are distributed in at least two lines (here four lines A, B, C, D) along the injection direction z, while the inline pitch P of each line in injection direction z is defined. Different lines of sampling elements 1040 are spaced in expanding direction y by defined intermediate distances e. The distribution of the different sampling element 1040 lines should cover the expansion in expanding direction y of the injected expanded beam 110'. The expansion of the expanded beam 110' should be adapted at least to the sum of intermediate distances e of all sampling element 1040 lines.

The 2d geometrical grid 104 or sampling element pattern 104 of the sampling elements 1040 is configured in order to have the sampling elements 1040 in lines parallel to the propagation or injection direction z of the guided light and wherein each line A, B, C, D of sampling elements 1040 has a well-defined offset along the propagation direction z as compared to the neighbouring lines of sampling elements 1040.

Experiments show, that good results can be achieved, if the number of sampling element lines is at least four, which is shown in Figure 2c. One innovative customized sampling element pattern 104 including nano-samplers 1040 in form of golden nanodisks on planar waveguide chip 10, is shown there. The nano-samplers 1040 are placed on the surface plane 1020 of the upper cladding 102. The expanded Gaussian beam in expanding direction y or non-confined direction is indicated by the arrows and the dotted intensity line, while the light is propagating in injection direction z through the slab-like sandwich planar waveguide chip 10.

Here a pitch P (of 4 µm) in each line A, B, C, D in injection direction z is chosen. Neighboured lines of sampling elements 1040 and photo detectors in the expanding direction y are displaced by a displacement of d (here 1 µm) in injection direction z, due to the offset. Therefore pitch P is divided in P/d sections, leading to spatial sampling interval d of 1 µm in injection direction z, while the pitch P does not need to be decreased.

The beam expansion allows more light to be coupled into the waveguide chip 10, yielding the increase of system throughput. In this document, a "pitch" is defined as the minimum distance between two neighboring nano-samplers 1040 in the same line in z-direction. The pitch of nano-samplers 1040 are chosen to have a resolvable image in the photo detector and to avoid crosstalk between nano-samplers 1040.

With sampling interval d, the minimum distance between directly neighbouring sampling elements 1040 in injection direction z or light propagating direction of different sampling element 1040 lines is meant.

The nanodisks 1040 in the example of Figure 2c also have an inline pitch of 4 µm similar to Figure 1b, meaning nanodisks 1040 are at least 4 µm distant, but the sampling interval d along the z-axis is 1 µm, thanks to the expanded beam 110' in the y-direction and the shifted sampling element lines A, B, C, D.

The channel waveguide spectrometer 1 respectively the waveguide chip 10 of Figure 1b (prior art) with 4 µm distance between nano-samplers 1040 has sampling intervals of 4 µm. In such a configuration, with the refractive index of 1.5, the single-mode waveguide spectrometer of Figure 1b, provides around 16 nm spectral bandwidth at 633 nm central wavelength.

The planar waveguide chip 10 of Figure 2c, with distance of 4 µm between adjacent nano-samplers 1040 in each line and 1 µm sampling intervals d, provides a ~4-time wider bandwidth at 633 nm central wavelength, when made with the same material as the channel waveguide (i.e. similar effective mode size). This is a significant bandwidth enhancement which is achievable due to 16 µm beam expansion in the unguided direction y of the planar waveguide 10, without introducing any moving mechanism. The increase of measurement points, in its turn, reduces the calibration and radiometric errors in post-processing FTS software.

The maximal achievable bandwidth in a LiPWS is defined by the maximal beam expansion in the planar waveguide chip 10. In other words, the wider the beam in the unguided direction y of the waveguide chip 10, the larger the number of sampling lines, giving more intermediate sampling points and smaller sampling intervals d.

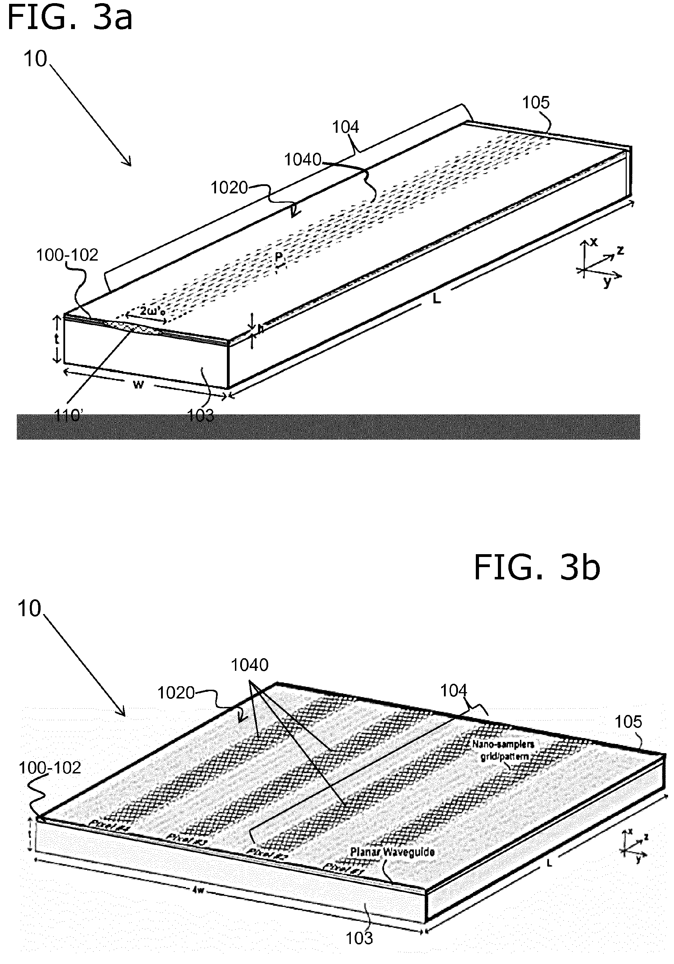

Figure 3a shows a 3D illustration of a LiPWS according to the above described setup of a slab-like sandwich planar waveguide chip 10. In this configuration, the planar waveguide chip 10 is fabricated with a substrate layer 103. The lower cladding 100 and upper cladding 102 were made of silicon dioxide, the core layer 101 of silicon oxynitride and the substrate layer 103 of bulk silica. The core layer 101 has slightly higher refractive index compared to that of the lower and upper cladding 100, 102. The reflective surface 105 at the end of the waveguide provides the interfering pattern (interferogram) in the planar waveguide chip 10. A proper front-end optics is required to couple the expanded beam 110' with an expanded spot with bigger spot size, than the incident spot size ω₀.

In Figure 3b a planar waveguide chip 10 as part of the waveguide spectrometer 1 is shown, with more than one single 2d grid arrays or patterns of single nano-samplers 1040. These sampling elements 1040 can be build identical or can differ in fabrication. Each sampling element pattern 104 can detect signals of one pixel. If these planar waveguide chips 10 are stacked in vertical direction x in a later stage, a 2d array of pixels can be measured.

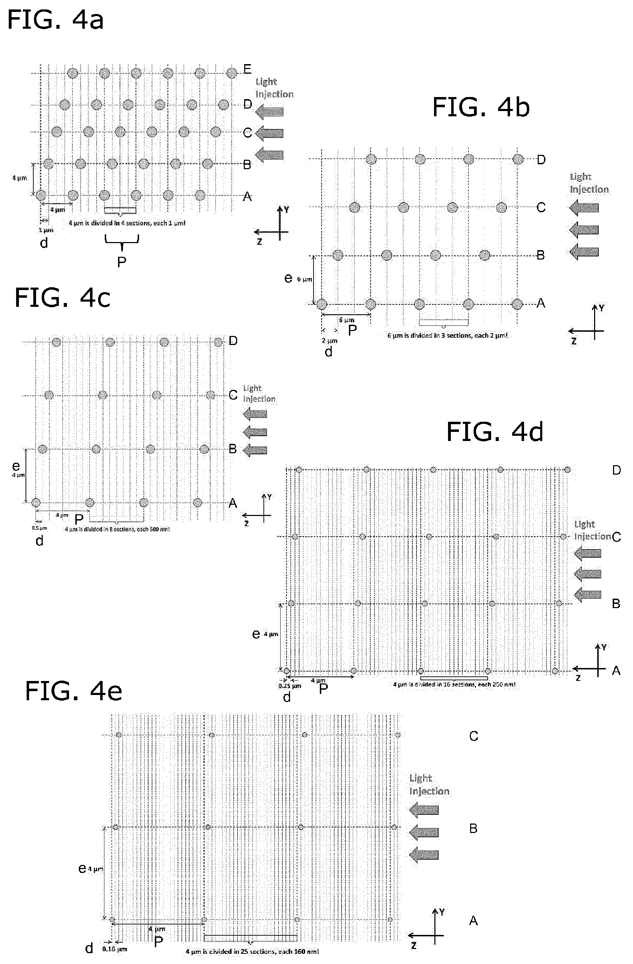

Figures 4 are showing some examples of possible sampling grids 104 or sampling element pattern 104 to be fabricated on the surface plane 1020 of the planar waveguide chip 10. These are only some examples and the possible sampling patterns 104 are not limited to these cases. The innovative planar waveguide spectrometer 1 is open to any customized configuration of sampling patterns according to the design requirements.

By taking advantage of the beam expansion in planar waveguide spectrometer 1, intermediate-points of the interferogram can be sampled according to the sampling patterns 104.

In the following examples, the bandwidth is calculated at the central wavelength of 633 nm in a waveguide chip 10, wherein the refractive index of the core layer 101 is 1.5. The achieved sampling intervals associated with the specific sampling grid and the required beam expansion in the planar waveguide chip 10 are described for different cases:
a) Pitch 4 µm, sampling interval d=1 µm, beam expansion 16 µm, spectrometer bandwidth 66 nm at 633 nm.
b) Pitch 6 µm, sampling interval d=2 µm, beam expansion 18 µm, spectrometer bandwidth 34 nm at 633 nm.
c) Pitch 4 µm, sampling interval d=0.5 µm, beam expansion 32 µm, spectrometer bandwidth 132 nm at 633 nm.
d) Pitch 4 µm, sampling interval d=0.25 µm, beam expansion 64 µm, spectrometer bandwidth 256 nm at 633 nm.
e) Pitch 4 µm, sampling interval d=0.16 µm, beam expansion 100 µm, spectrometer bandwidth 380 nm at 633 nm.

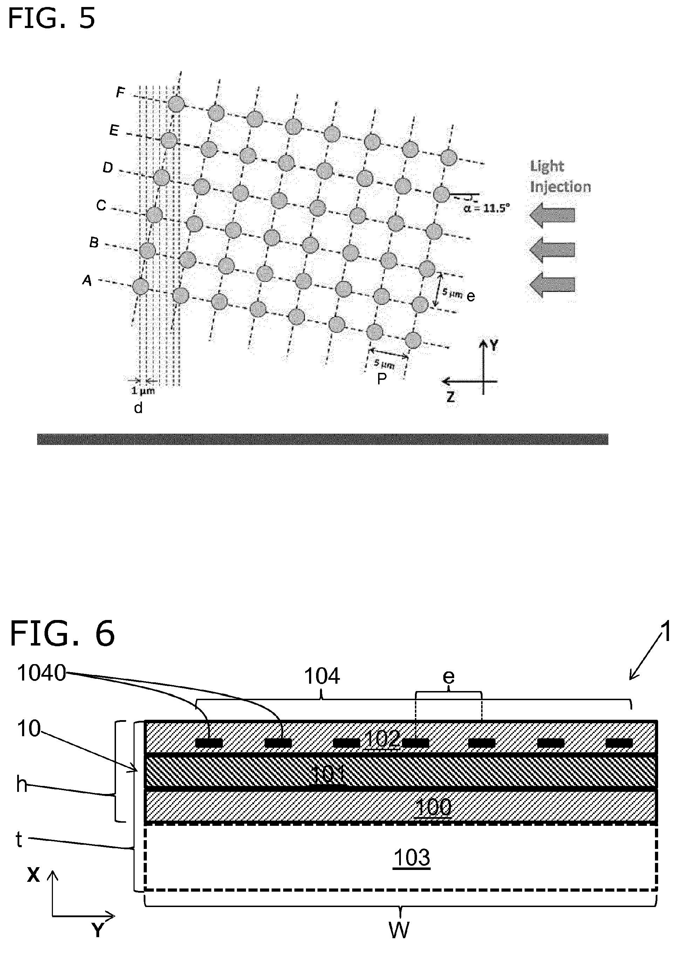

As shown in Figure 5 a sampling element pattern 104 can be a rotated regular grid 104 of nanodisks 1040, whereby the lines of sampling elements 1040 are running parallel to each other but with an angle α relative to the z-direction. The rectangular grid 104 is rotated by a well-defined rotation angle α, here 11.5°, within the same plane as defined by the planar waveguide. Each sampling pattern provides specific bandwidth within the expanded beam. Pitch P is 5 µm, sampling interval 1 µm, beam expansion 21 µm, results in spectrometer bandwidth 66 nm at 633 nm.

In another embodiment the 2D sampling element pattern 104 is an arbitrary 2D pattern 104 of sampling elements 1040 with well-defined sampler positions in either direction achieving well-defined sampling intervals along the light propagation direction z.

The planar waveguide chips 10 can be of a variety of materials. The constraints are that the planar waveguide chip 10 should carry only the fundamental mode in vertical direction x at the operation wavelength (single-mode operation in x-direction) and the tail of evanescent fields should reach the nano-samplers 1040.

The nano-samplers 1040 can be 2d grid or pattern of any electrically conductive or non-conductive sampling structure deposited onto the surface plane 1020. The nano-samplers 1040 are either fabricated on the surface plane 1020 of the upper cladding 102 respectively the planar waveguide chip 10 or embedded in the waveguide chip 10 structure. As shown in Figure 6, the sampling elements 1040 could also be embedded in the waveguide chip 10, here in the upper cladding 102, forming a two dimensional grid 104 of sampling elements 1040. The necessary electronic connecting cables, connecting the sampling elements with the photo detectors and the electronic read out system, are not depicted here. If the sampling elements 1040 are placed on top of the surface plane 1020, the photo detectors and the electronic cables are more easily connectable outside the waveguide chip 10.

The waveguide spectrometer 1 as described above can comprise a multiplicity of planar waveguide chips 10, comprising lower cladding 100, core layer 101 and upper cladding 102 and a sampling element pattern 104 embedded in the planar waveguide chips 10 or on the surface plane 1020 of each upper cladding 102 and associated photo detectors connectable with the electronic read out system. In this case the multiplicity of waveguide chips 10 is stacked in vertical direction x and/or expanding direction y together, allowing measurements of 2d patterns of pixels of at least one expanded beam 110'. These waveguide spectrometer 1 can be formed, with waveguide chips 10 respectively waveguide spectrometers 1 arranged side by side, or stacked one above the other, or both side by side and stacked, in order to achieve a line or an imaging configuration.

In another option the waveguide chip 10 could also be built with a multiplicity of single neighboured waveguide channels protruding through a substrate from an inlet face to a reflective surface. Accordingly the sampling element pattern 104 has to be arranged in order to measure a multiplicity of interferograms I of the expanded beam 110'.

The novelty here is the use of planar waveguide chips 10, as the core of the waveguide spectrometer 1 in order to increase not only the optical throughput of the system through mode expansion in unguided direction of the waveguide 1 but also to increase the number of measurement points thanks to the novel intermediate-points sampling technique implemented on the planar waveguide chip 10. The number of interferogram I sampling points is increased without decreasing the distance between adjacent nano-samplers 1040, but instead by placing them into customized sampling grids 104.

The bandwidth is only limited by the efficiency of nano-samplers 1040 and the beam waist of the expanded beam 110'. For instance, with 60 µm mode expansion in a planar waveguide chip 10 with effective mode size of 4 µm and effective refractive index of 1.5, a spectral bandwidth of ~240 nm is achieved at 633 nm central wavelength limited only by the scattering efficiency of nano-samplers (most commercialized single-block waveguide spectrometers, e.g. SWIFTS, have sub-10 nm bandwidth). In this example, a spectral resolution of 0.014 nm (R = 45'200) is reachable given a 1 cm long sampling length.

The here described LiPWS 1 does not require temporal scanning, since it has no moving parts. Therefore, the system is immune to vibrations or other varying noise sources that need to be calibrated out in temporally scanned Fourier spectrometer systems. All point-to-point errors in the interferogram I are fixed at the time of manufacture and can be calibrated in advance per instrument. The waveguide spectrometer 1 is very simple, robust, accurate (radiometrically and spectrally) and at the same time affordable. It has therefore the potential to be useful not only for space applications such as Earth observation and planetary exploration, but also to be very attractive for various terrestrial applications.

### LIST OF REFERENCE NUMERALS

- 1: waveguide spectrometer / LiPWS
- 10: waveguide chip (e.g. slab-like, sandwich, etc.)
100 lower cladding
101 core layer
102 upper cladding
1020 surface plane
103 optional substrate layer
104 sampling element pattern (2d grid)
1040 sampling element, nano-sampler
P inline pitch of nano-sampler in z-direction
e intermediate distance of nano-sampler in expanding direction
A, B, C, D, E smapling element lines /lines of nano-sampler
d sampling interval = displacement of lines
α angle between injection direction z and lines of nano-sampler
105 reflective surface
F inlet face
- h: height of 100 to 102
- t: total height of planar waveguide chip with substrate
- W: width of chip
- L: length of chip

- 11: injected beam
- 110: confined light beam in single-mode waveguide
- 110': injected expanded beam
- z: propagation / injection direction
- y: expanding direction
- x: vertical direction

## Claims

1. Waveguide spectrometer, comprising at least one planar waveguide chip (10) with at least one waveguide extending from an inlet face (F) to a reflective surface (105), in which an incident beam (11) is injectable, to achieve counter propagating optical signals inside the planar waveguide chip (10) obtaining interference between the counter propagating optical signals generating an interference pattern along the propagation direction (z) of the planar waveguide chip (10),
wherein a multiplicity of sampling elements (1040) configured to out-couple light from the interfering guided optical signals and photo detectors arranged on the planar waveguide chip (10), while the photo detectors are applicable to detect the out-coupled light each electrically connected to an electronic read out system,
**characterized in that**
beam expanding means are located ahead the inlet face (F) of the planar waveguide chip (10), able to expand the incident beam (11) in an expanding direction (y) perpendicular to the propagation direction (z) resulting in an expanded beam (110') and
the single sampling elements (1040) are embedded in the planar waveguide chip (10) or located on a surface plane (1020) of the planar waveguide chip (10) forming a two dimensional grid (104), comprising a multiplicity of lines with sampling elements (1040) spaced apart from each other by an inline pitch (P) in each line, wherein directly neighbouring lines of sampling elements (1040) perpendicular to the propagation direction (z) have a well-defined offset along the propagation direction (z) to each other, defining a sampling interval (d) in propagation direction (z) of the waveguide chip (10), wherein the distribution of the different sampling element (1040) lines should cover the expansion in expanding direction (y) of the injected expanded beam (110').

2. Waveguide spectrometer (1) according to claim 1, wherein the two dimensional grid (104) is a regular grid (104) with parallel lines of single sampling elements (1040) with fixed intermediate distances (e) between the lines and equal inline pitches (P), achieving well-defined sampling intervals (d) along the light propagation direction (z).

3. Waveguide spectrometer (1) according to claim 2, wherein the two dimensional grid (104) comprises at least two lines (A, B, C, D) of sampling elements (1040) with fixed inline pitches (P) and fixed intermediate distances (e) of directly neighboured lines (A, B, C, D) running parallel in expanding direction (y).

4. Waveguide spectrometer (1) according to claim 2, wherein the at least two lines (A, B, C, D) of sampling elements (1040) are rotated by a rotation angle (α) around the propagation direction (z).

5. Waveguide spectrometer (1) according to claim 1, wherein the two dimensional grid (104) is an arbitrary non-regular grid (104) with well-defined sampler positions with variable inline pitches (P) and intermediate distances (e) between the lines, achieving well-defined sampling intervals (d) along the light propagation direction (z).

6. Waveguide spectrometer (1) according to one of the preceding claims, wherein the planar waveguide chip (10) is formed slab-like with different layers in form of a sandwich, comprising at least one lower cladding (100), a core layer (101) and an upper cladding (102), while the refractive indexes of lower and upper cladding (100, 102) are less than the refractive index of the core layer (101).

7. Waveguide spectrometer (1) according to one of the preceding claims, wherein the nano-samplers (1040) are single disks, in particular gold nanodisks, fabricated on the surface plane (1020) of the upper cladding (102).

8. Waveguide spectrometer (1) according claim 6 or 7, wherein the lower cladding (100) and the upper cladding (102) are made of silicon dioxide and the core layer (101) is made of silicon oxynitride.

9. Waveguide spectrometer (1) according claim 6 or 7, wherein the lower cladding (100) and the upper cladding (102) are made of silicon oxynitride and the core layer (101) is made of silicon nitride.

10. Waveguide spectrometer (1) according to one of the preceding claims, wherein the planar waveguide chip (10) comprises at least one substrate layer (103).

11. Waveguide spectrometer (1) according to claim 9, wherein the substrate layer (103) is made of silica.

12. Waveguide spectrometer (1) according to one of the claims 6 to 11, wherein a multiplicity of planar waveguide chips (10), comprising lower cladding (100), a core layer (101) and upper cladding (102) and sampling element grid (104) on the surface plane (1020) of each upper cladding (102) and associated photo detectors connectable with the electronic read out system, is stacked in vertical direction (x) and/or expanding direction (y) together, allowing measurements of 2d patterns of pixels of at least one expanded beam (110').

13. Method for Fourier Transform Spectrometer measurements using a waveguide spectrometer (1) with a planar waveguide chip (10) at which an optical beam in the UV-VIS-NIR-IR optical range is analysed,
**characterized in the steps of**
using at least one planar waveguide chip (10) according to one of the preceding claims,
providing an expanding beam (110') with expanding means and injecting through at least one inlet face (F) into the at least one planar waveguide chip (10) in an injection direction (z) and forming interferograms (I) by creating interference pattern along the planar waveguide chip (10) by reflection of the expanded beam (110') at a reflective surface (105), while an out-coupling of light is done by a multiplicity of sampling elements (1040) arranged in a sampling element grid (104) embedded in the at least one planar waveguide chip (10) or on a surface plane 1020 of each at least one planar waveguide chip (10), before measurements with photo detectors associated to the sampling elements (1040) by an electronic read out system is carried out.

14. Method according to claim 12, wherein a slab-like planar waveguide chip (10) with different layers in form of a sandwich, comprising at least one lower cladding (100), a core layer (101) and an upper cladding (102), while the refractive indexes of lower and upper cladding (100, 102) are less than the refractive index of the core layer (101), is used for.
